# EUROPEAN PATENT APPLICATION

(11) **EP 4 787 809 A1**
(43) Date of publication of application: **05.08.2026**
(21) Application number: 24876397.1
(22) Date of filing: 25.09.2024
(51) Int. Cl.: H04L 47/50

(54) **NETWORK PROCESSOR AND RELATED INSTRUCTION SCHEDULING METHOD**

(30) Priority: 10.10.2023 CN 202311311744
(71) Applicant: HUAWEI TECHNOLOGIES CO., LTD., Shenzhen 518129 (CN)
(72) Inventor: WANG, Jin, Shenzhen, Guangdong 518129 (CN); LI, Yi, Shenzhen, Guangdong 518129 (CN)
(74) Representative: Körber, Martin Hans
(86) International application number: PCT/CN2024/121164
(87) International publication number: WO 2025/077579

(57) **Abstract**

This application relates to the field of chip technologies, and provides a network processor and a related instruction scheduling method, to improve instruction execution efficiency. The network processor includes a scheduler, a plurality of scheduling control modules, and a plurality of cache queues. The plurality of scheduling control modules are configured to separately obtain a first quantity of instructions from one of a plurality of non-empty cache queues, generate a scheduling request based on first indication information of the first quantity of instructions in each non-empty cache queue, to obtain a plurality of scheduling requests, and send the plurality of scheduling requests to the scheduler. The scheduler is configured to respond to the plurality of scheduling requests and send at least one scheduling response signal to at least one scheduling control module. The at least one scheduling control module is further configured to respond to the at least one scheduling response signal, and generate a to-be-executed instruction word based on the first quantity of instructions in a target cache queue and a target scheduling mode.

## Description

This application claims priority to Chinese Patent Application No. 202311311744.0, filed with the China National Intellectual Property Administration on October 10, 2023 and entitled "NETWORK PROCESSOR AND RELATED INSTRUCTION SCHEDULING METHOD", which is incorporated herein by reference in its entirety.

### TECHNICAL FIELD

This application relates to the field of chip technologies, and in particular, to a network processor and a related instruction scheduling method.

### BACKGROUND

Network processors (network processor, NP) are devices with flexible programmable capabilities widely used in switches and routers. The network processors can be used to handle various tasks in the communication field, such as protocol analysis, packet classification, media access control (media access control, MAC) switching, route lookup, firewalls, quality of service (quality of service, QoS), and packet editing.

### SUMMARY

This application provides a network processor and a related instruction scheduling method, to improve instruction execution efficiency.

According to a first aspect, this application provides a network processor. The network processor includes a scheduler, a plurality of scheduling control modules, and a plurality of cache queues. The plurality of scheduling control modules are in one-to-one correspondence with the plurality of cache queues. The plurality of scheduling control modules are configured to separately obtain a first quantity of instructions from one of a plurality of non-empty cache queues, and generate a scheduling request based on first indication information of the first quantity of instructions in each non-empty cache queue, to obtain a plurality of scheduling requests. Each scheduling request corresponds to each non-empty cache queue, and the first indication information indicates a scheduling mode of the first quantity of instructions. The plurality of scheduling control modules are further configured to send the plurality of scheduling requests to the scheduler. The scheduler is configured to respond to the plurality of scheduling requests and send at least one scheduling response signal to at least one scheduling control module, where the scheduling response signal indicates a to-be-scheduled target cache queue and a target scheduling mode of the first quantity of instructions. The at least one scheduling control module is further configured to respond to the at least one scheduling response signal, and generate a to-be-executed instruction word based on the first quantity of instructions in the target cache queue and the target scheduling mode.

In this case, according to the network processor provided in this application, the network processor may support a plurality of scheduling modes, for example, support both a superscalar scheduling mode and a very long instruction word scheduling mode, and flexibly select a scheduling mode based on an instruction. For example, for instructions with high inter-instruction dependency, the superscalar scheduling mode may be used to improve instruction execution efficiency. For instructions with low inter-instruction dependency, a plurality of instructions may be packaged in the very long instruction word scheduling mode, to reduce an instruction execution latency. Therefore, the network processor provided in this application may provide an adaptive scheduling mode of an instruction, so that the instruction execution efficiency can be improved, and the instruction execution latency can be reduced.

In a possible design, the scheduling mode includes a very long instruction word scheduling mode. When scheduling modes corresponding to the plurality of scheduling requests include the very long instruction word scheduling mode, the scheduling requests further include instruction distribution information indicative of distribution locations of a valid instruction and a no-operation instruction in the first quantity of instructions in the cache queue. The scheduling response signal includes a very long instruction word scheduling response signal, and the very long instruction word scheduling response signal indicates that the target scheduling mode is the very long instruction word scheduling mode. The scheduler is specifically configured to respond to the plurality of scheduling requests and send the very long instruction word scheduling response signal to a scheduling control module corresponding to a scheduling request whose scheduling mode is the very long instruction word scheduling mode. In this case, the network processor may schedule an instruction in the very long instruction word scheduling mode, so that an instruction parallelism degree is high and a processing latency is low. In addition, the scheduling control module may further identify the distribution locations of the valid instruction and the no-operation instruction, and generate the instruction distribution information. Subsequently, instruction scheduling may be performed based on the instruction distribution information, so that a quantity of clock cycles for executing a plurality of instructions can be reduced, and instruction execution efficiency can be improved.

In a possible design, the instruction word includes a very long instruction word. When a first scheduling request corresponding to a first cache queue in the target cache queue indicates that a scheduling mode of the first cache queue is the very long instruction word scheduling mode, the scheduler is further configured to: when instruction distribution information of the first scheduling request indicates that there is a no-operation instruction, respond to a second scheduling request corresponding to a second cache queue in the target cache queue and send a superscalar scheduling response signal to a scheduling control module corresponding to the second cache queue. The scheduling control module is further configured to perform a shift operation and an OR operation on an instruction in the first cache queue and an instruction in the second cache queue, to generate a to-be-executed very long instruction word. In this case, the shift operation and the OR operation are performed on the instruction in the first cache queue and the instruction in the second cache queue, and all instructions in the very long instruction word generated by the network processor are valid instructions. This improves instruction density, and can reduce a quantity of clock cycles for executing a plurality of instructions, improve instruction execution efficiency, and alleviate problems of a large circuit area and high power consumption for network processing.

In a possible design, the scheduling mode includes a superscalar scheduling mode, the scheduling response signal includes a superscalar scheduling response signal, and the superscalar scheduling response signal indicates that the target scheduling mode is the superscalar scheduling mode. When scheduling modes corresponding to the plurality of scheduling requests are all the superscalar scheduling mode, the scheduler is specifically configured to respond to the plurality of scheduling requests and send a plurality of superscalar scheduling response signals to the plurality of scheduling control modules. In this case, the network processor may schedule an instruction based on the superscalar scheduling mode, to improve execution efficiency of instructions with low inter-instruction dependency.

In a possible design, the instruction word includes a superscalar instruction word. The scheduling control module is specifically configured to respond to the plurality of superscalar scheduling response signals, and generate a to-be-executed superscalar instruction word based on the first quantity of instructions in the target cache queue and the superscalar scheduling mode, where a quantity of instructions in the superscalar instruction word is the same as the first quantity, a location of a valid instruction in the superscalar instruction word corresponds to an identifier of the target cache queue, and an instruction other than the valid instruction in the superscalar instruction word is a no-operation instruction. Therefore, for instructions with high inter-instruction dependency, the superscalar scheduling mode may be used, and the instruction other than the valid instruction in the superscalar instruction word is the no-operation instruction. This may adapt to the network processor. The network processor may support both the very long instruction word scheduling mode and a superscalar scheduling module, to improve instruction execution efficiency and reduce an instruction latency.

In a possible design, the plurality of cache queues are configured to cache received instructions into target cache queues based on received second indication information, where the second indication information indicates identifiers of the target cache queues of the instructions.

In a possible design, the network processor further includes an execution module, and the execution module is configured to execute the to-be-executed instruction word.

In a possible design, the execution module includes a plurality of first multiplexers, a plurality of registers, a second multiplexer, and a plurality of third multiplexers, where the plurality of first multiplexers are in one-to-one correspondence with the plurality of registers, and the plurality of registers are in one-to-one correspondence with the plurality of third multiplexers. An output end of each first multiplexer is coupled to an input end of a corresponding register, output ends of the plurality of registers are respectively coupled to a plurality of input ends of the second multiplexer, an output end of each register is further coupled to a first input end of a corresponding third multiplexer, and an output end of the second multiplexer is further coupled to a second input end of the third multiplexer. The second multiplexer is configured to obtain an operand of an instruction in the to-be-executed very long instruction word. The third multiplexer is configured to determine, from the operand of the instruction in the to-be-executed very long instruction word obtained by the second multiplexer and an operand of the instruction in the superscalar instruction word, a to-be-executed operand corresponding to a thread. In this case, the plurality of third multiplexers are disposed, so that the network processor can support both the very long instruction word scheduling mode and the superscalar scheduling mode, and hardware costs are low.

In a possible design, the network processor further includes a storage module, configured to store a plurality of instructions. If a storage address of the instruction in the storage module is within a first address range, the scheduling mode of the instruction indicated by the first indication information is the superscalar scheduling mode; or if a storage address of the instruction in the storage module is within a second address range, the scheduling mode of the instruction indicated by the first indication information is the very long instruction word scheduling mode. In this case, the storage module may store a plurality of instructions in different scheduling modes.

In a possible design, if the first indication information is a first value, the scheduling mode of the instruction indicated by the first indication information is the superscalar scheduling mode; or if the first indication information is a second value, the scheduling mode of the instruction indicated by the first indication information is the very long instruction word scheduling mode.

According to a second aspect, this application provides a compiler. The compiler includes a compilation module and a sending module. The compilation module is configured to compile an instruction based on a compilation requirement corresponding to the instruction, to obtain a compiled instruction and first indication information, where the first indication information indicates a scheduling mode of the compiled instruction. The sending module is configured to send the compiled instruction and the first indication information to a network processor.

In this case, the compiler provided in this application can implement hybrid compilation of a superscalar instruction word and a very long instruction word, to help improve instruction execution efficiency.

In a possible design, the compilation requirement includes a compilation mode including a superscalar compilation mode and a very long instruction word compilation mode, and the scheduling mode includes a superscalar scheduling mode and a very long instruction word scheduling mode. If a compilation mode of the instruction is the superscalar compilation mode, the first indication information indicates that the scheduling mode of the instruction is the superscalar scheduling mode. If a compilation mode of the instruction is the very long instruction word compilation mode, the first indication information indicates that the scheduling mode of the instruction is the very long instruction word scheduling mode.

In a possible design, the compilation requirement is determined based on a service type corresponding to the instruction.

According to a third aspect, this application provides an instruction scheduling method. A network processor includes a scheduler, a plurality of scheduling control modules, and a plurality of cache queues. The plurality of scheduling control modules are in one-to-one correspondence with the plurality of cache queues. The method includes: The plurality of scheduling control modules separately obtain a first quantity of instructions from one of a plurality of non-empty cache queues, and generate a scheduling request based on first indication information of the first quantity of instructions in each non-empty cache queue, to obtain a plurality of scheduling requests, where the scheduling requests are corresponding to the non-empty cache queues respectively, and the first indication information indicates a scheduling mode of the first quantity of instructions. The plurality of scheduling control modules send the plurality of scheduling requests to the scheduler. The scheduler responds to the plurality of scheduling requests and sends at least one scheduling response signal to at least one scheduling control module, where the scheduling response signal indicates a to-be-scheduled target cache queue and a target scheduling mode of the first quantity of instructions. The at least one scheduling control module responds to the at least one scheduling response signal, and generates a to-be-executed instruction word based on the first quantity of instructions in the target cache queue and the target scheduling mode.

For beneficial effects of the third aspect, refer to the descriptions of the first aspect.

In a possible design, the scheduling mode includes a very long instruction word scheduling mode. When scheduling modes corresponding to the plurality of scheduling requests include the very long instruction word scheduling mode, the scheduling requests further include instruction distribution information indicative of distribution locations of a valid instruction and a no-operation instruction in the first quantity of instructions in the cache queue. The scheduling response signal includes a very long instruction word scheduling response signal, and the very long instruction word scheduling response signal indicates that the target scheduling mode is the very long instruction word scheduling mode. That the scheduler responds to the plurality of scheduling requests and sends the at least one scheduling response signal to the at least one scheduling control module includes: The scheduler responds to the plurality of scheduling requests and sends the very long instruction word scheduling response signal to a scheduling control module corresponding to a scheduling request whose scheduling mode is the very long instruction word scheduling mode.

In a possible design, the instruction word includes a very long instruction word. When a first scheduling request corresponding to a first cache queue in the target cache queue indicates that a scheduling mode of the first cache queue is the very long instruction word scheduling mode, the method further includes: When instruction distribution information of the first scheduling request indicates that there is a no-operation instruction, the scheduler responds to a second scheduling request corresponding to a second cache queue in the target cache queue and sends a superscalar scheduling response signal to a scheduling control module corresponding to the second cache queue. The scheduling control module performs a shift operation and an OR operation on an instruction in the first cache queue and an instruction in the second cache queue, to generate a to-be-executed very long instruction word.

In a possible design, the scheduling mode includes a superscalar scheduling mode, the scheduling response signal includes a superscalar scheduling response signal, and the superscalar scheduling response signal indicates that the target scheduling mode is the superscalar scheduling mode. When scheduling modes corresponding to the plurality of scheduling requests are all the superscalar scheduling mode, that the scheduler responds to the plurality of scheduling requests and sends the at least one scheduling response signal to the at least one scheduling control modules includes: The scheduler responds to the plurality of scheduling requests and sends a plurality of superscalar scheduling response signals to the plurality of scheduling control modules.

In a possible design, the instruction word includes a superscalar instruction word. That the at least one scheduling control module responds to the at least one scheduling response signal, and generates the to-be-executed instruction word based on the first quantity of instructions in the target cache queue and the target scheduling mode includes: The scheduling control module responds to the plurality of superscalar scheduling response signals, and generates a to-be-executed superscalar instruction word based on the first quantity of instructions in the target cache queue and the superscalar scheduling mode, where a quantity of instructions in the superscalar instruction word is the same as the first quantity, a location of a valid instruction in the superscalar instruction word corresponds to an identifier of the target cache queue, and an instruction other than the valid instruction in the superscalar instruction word is a no-operation instruction.

In a possible design, the method further includes: The plurality of cache queues cache received instructions into target cache queues based on received second indication information, where the second indication information indicates identifiers of the target cache queues of the instructions.

In a possible design, the network processor further includes an execution module. The method further includes: The execution module executes the to-be-executed instruction word.

In a possible design, the execution module includes a plurality of first multiplexers, a plurality of registers, a second multiplexer, and a plurality of third multiplexers. The plurality of first multiplexers are in one-to-one correspondence with the plurality of registers, and the plurality of registers are in one-to-one correspondence with the plurality of third multiplexers. An output end of each first multiplexer is coupled to an input end of a corresponding register, output ends of the plurality of registers are respectively coupled to a plurality of input ends of the second multiplexer, an output end of each register is further coupled to a first input end of a corresponding third multiplexer, and an output end of the second multiplexer is further coupled to a second input end of the third multiplexer. That the execution module executes the to-be-executed instruction word includes: The execution module controls the second multiplexer to obtain an operand of an instruction in the to-be-executed very long instruction word, and the third multiplexer to determine, from the operand of the instruction in the to-be-executed very long instruction word obtained by the second multiplexer and an operand of the instruction in the superscalar instruction word, a to-be-executed operand corresponding to a thread.

In a possible design, the network processor further includes a storage module. The method further includes: controlling the storage module to store a plurality of instructions, where if a storage address of the instruction in the storage module is within a first address range, the scheduling mode of the instruction indicated by the first indication information is the superscalar scheduling mode. If a storage address of the instruction in the storage module is within a second address range, the scheduling mode of the instruction indicated by the first indication information is the very long instruction word scheduling mode.

In a possible design, if the first indication information is a first value, the scheduling mode of the instruction indicated by the first indication information is the superscalar scheduling mode, or if the first indication information is a second value, the scheduling mode of the instruction indicated by the first indication information is the very long instruction word scheduling mode.

According to a fourth aspect, this application provides a compilation method. The compilation method is applied to a compiler, and the compiler includes a compilation module and a sending module. The method includes: compiling an instruction based on a compilation requirement corresponding to the instruction, to obtain a compiled instruction and first indication information, where the first indication information indicates a scheduling mode of the compiled instruction. The sending module sends the compiled instruction and the first indication information to a network processor.

In a possible design, the compilation requirement includes a compilation mode including a superscalar compilation mode and a very long instruction word compilation mode, and the scheduling requirement includes a superscalar scheduling mode and a very long instruction word scheduling mode. If a compilation mode of the instruction is the superscalar compilation mode, the first indication information indicates that the scheduling mode of the instruction is the superscalar scheduling mode. If a compilation mode of the instruction is the very long instruction word compilation mode, the first indication information indicates that the scheduling mode of the instruction is the very long instruction word scheduling mode.

In a possible design, the compilation requirement is determined based on a service type corresponding to the instruction.

For beneficial effects of the fourth aspect, refer to the descriptions of the second aspect.

According to a fifth aspect, this application provides a chip. The chip includes a network processor and a power supply circuit. The power supply circuit is configured to supply power to the network processor, and the network processor is configured to implement the method in the third aspect.

According to a sixth aspect, this application provides a computer device. The computer device includes a processor and a storage, and the storage is configured to store a set of computer instructions. When executing the set of computer instructions, the processor is configured to perform the method according to the third aspect or the fourth aspect.

According to a seventh aspect, an embodiment of this application provides a computer-readable storage medium, including computer instructions. When the computer instructions are run on an electronic device, the electronic device is enabled to perform the instruction scheduling method or the compilation method according to any one of the foregoing aspects or the possible implementations.

According to an eighth aspect, an embodiment of this application provides a computer program product. When the computer program product runs on a computer or a processor, the computer or the processor is enabled to perform the instruction scheduling method or the compilation method according to any one of the foregoing aspects or the possible implementations.

It may be understood that any one of the network processor, the compiler, the chip, the computer device, the computer-readable storage medium, the computer program product, or the like provided above may be used in the corresponding method provided above. Therefore, for beneficial effects that can be achieved by the network processor, the compiler, the chip, the computer device, the computer-readable storage medium, or the computer program product, refer to beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of a structure of a network processor according to an embodiment of this application;
FIG. 2 is a diagram of a structure of a microcode processor according to an embodiment of this application;
FIG. 3 is a block diagram of an architecture of a superscalar network processor that allows parallel execution of four instructions according to an embodiment of this application;
FIG. 4 is a diagram of an EP structure of a superscalar network processor according to an embodiment of this application;
FIG. 5 is a diagram of a structure of a very long instruction word network processor according to an embodiment of this application;
FIG. 6 is a diagram of a structure of a network processor according to an embodiment of this application;
FIG. 7 is a schematic flowchart of scheduling performed by a network processor according to an embodiment of this application;
FIG. 8 is a flowchart of a very long instruction word scheduling mode according to an embodiment of this application;
FIG. 9 is a flowchart of another very long instruction word scheduling mode according to an embodiment of this application;
FIG. 10 is a diagram of a structure of another network processor according to an embodiment of this application;
FIG. 11 is a diagram of an execution module in different modes according to an embodiment of this application;
FIG. 12 is a diagram of a structure of an execution module according to an embodiment of this application;
FIG. 13 is a diagram of storage of a storage module according to an embodiment of this application;
FIG. 14 is a diagram of a structure of a compiler according to an embodiment of this application;
FIG. 15 is a flowchart of an instruction scheduling method according to an embodiment of this application; and
FIG. 16 is a flowchart of a compilation method according to an embodiment of this application.

### DESCRIPTION OF EMBODIMENTS

For ease of understanding, some concepts related to embodiments of this application are described for reference by using examples. Details are as follows:
Instructions may include arithmetic and logical operation instructions, for example, an addition instruction, a subtraction instruction, a multiplication instruction, a division instruction, an AND instruction, an OR instruction, a NOT instruction, and an exclusive OR instruction; shift operation instructions, for example, an arithmetic shift instruction, a logical shift instruction, and a cyclic shift instruction; data transfer instructions, for example, an instruction for transferring between general-purpose registers or an instruction for transferring between different storage units of a main storage; input/output instructions, for transferring between a general-purpose register and an input/output device; branch instructions, for example, instructions for changing an execution sequence in a program; and stack operation instructions.

The following describes technical solutions in embodiments of this application with reference to the accompanying drawings in embodiments of this application. In descriptions in embodiments of this application, "/" means "or" unless otherwise specified. For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely used for a purpose of description, and shall not be construed as an indication or implication of relative importance or implicit indication of a quantity of indicated technical features. Therefore, a feature defined by "first" or "second" may explicitly or implicitly include one or more such features. In the descriptions of embodiments, unless otherwise specified, "a plurality of" means two or more.

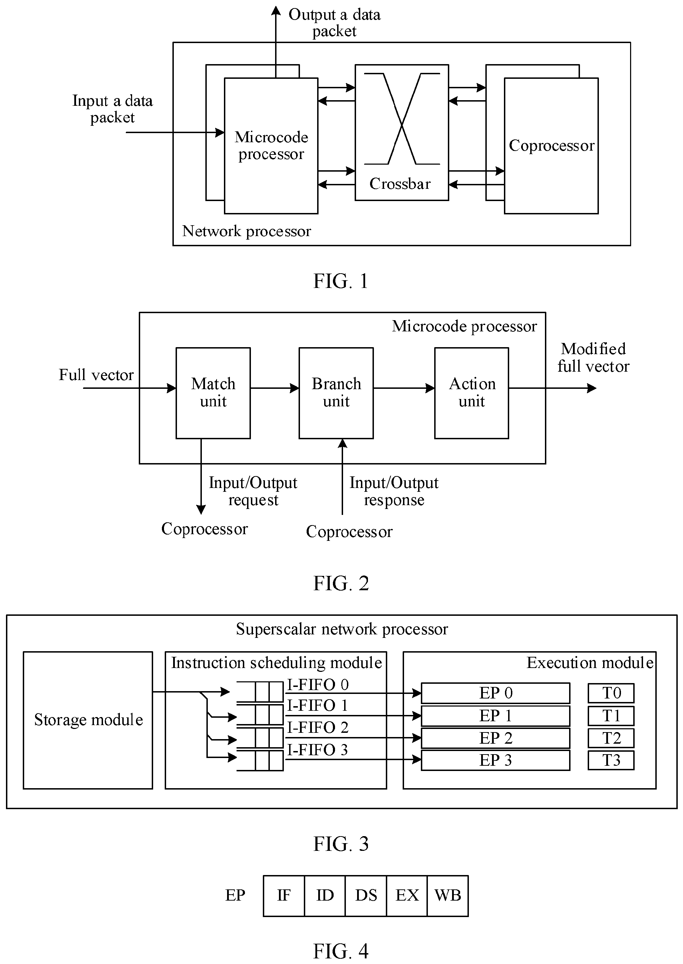

FIG. 1 is a diagram of a structure of a network processor according to an embodiment of this application. The network processor may include a microcode processor, a coprocessor, and a crossbar (crossbar). The microcode processor communicates with the crossbar through a bus, and the crossbar communicates with the coprocessor through a bus. The microcode processor is mainly responsible for processing an input data packet (packet), for example, processing an input packet header based on pre-compiled microcode, and outputting a data packet. Some other complex processing operations are performed by the coprocessor.

FIG. 2 is a diagram of a structure of the microcode processor. The microcode processor may include a match unit (match unit), a branch unit (branch unit), and an action unit (action unit). The match unit extracts some fields from a full vector (full vector, FV) to form an input/output request (input/output request, I/O request), and sends the input/output request to the coprocessor. The coprocessor returns an input/output response (input/output response, I/O response) after performing table lookup or a related algorithm. The branch unit performs branch acceleration based on the full vector and the input/output response, to obtain an entry of a specified branching program. The action unit executes the program based on the entry of the specified branching program to modify the full vector, and then outputs a modified full vector, or ends the program and outputs a packet. It may be understood that the match unit, the branch unit, and the action unit may all be implemented by using a programmable processor.

To reduce an area and power consumption of the network processor, a superscalar (superscalar) network processor is provided. The superscalar network processor uses an architecture that implements a type of parallelism operation such as instruction-level parallelism in a single processor core. The superscalar network processor using the architecture can achieve a higher processing throughput (throughput) at a same clock rate. The processor core generally includes a plurality of execution units (or referred to as functional units) such as an arithmetic logic unit and a shift unit. When the network processor does not use the superscalar architecture, the network processor can execute only one instruction per clock cycle. In this case, only one execution unit is working, and another execution unit is idle. When the network processor uses the superscalar architecture, the network processor can simultaneously dispatch (dispatch) a plurality of instructions to different execution units for execution in one clock cycle, to implement parallel execution of the instructions.

FIG. 3 is a block diagram of an architecture of a superscalar network processor that allows parallel execution of four instructions. The superscalar network processor may include a storage module, an instruction scheduling module, and an execution module. The storage module may be a memory (memory) or a cache (cache). The storage module is configured to store instructions (instructions). After obtaining the instruction from the storage module, a thread-based program counter (program counter, PC) caches the instruction into an instruction first input first output (instruction first input first output, I-FIFO) queue of the instruction scheduling module. Each I-FIFO is bound to one thread (thread). FIG. 3 shows four I-FIFOs, for example, an I-FIFO 0, an I-FIFO 1, an I-FIFO 2, and an I-FIFO 3, and four threads, for example, T0, T1, T2, and T3. When the I-FIFOs are non-empty, instructions are scheduled from the I-FIFOs and then dispatched to corresponding execution pipelines (execution pipelines, EPs), for example, an EP 0, an EP 1, an EP 2, and an EP 3, for execution. Each EP is bound to a fixed thread. For example, an instruction in the I-FIFO 0 is dispatched to the EP 0, the EP 0 is bound to T0, and T0 executes the instruction.

FIG. 4 shows an EP structure of the superscalar network processor. The EP may include an instruction fetch (instruction fetch, IF) operation, an instruction decode (instruction decode, ID) operation, a data select (data select, DS) operation, an execute (execute, EX) operation, and a write back (write back, WB) operation that are performed in sequence. The instruction fetch operation is to obtain an instruction from the storage module and store the instruction in an instruction register. The instruction decode operation is to split and interpret the fetched instruction based on a predetermined instruction format, to identify and distinguish between different instruction types and various methods for obtaining operands. The data select operation is to obtain an address of an operand in the storage module based on an instruction address code, and read the operand from the storage module for calculation. The execute operation is to complete various operations specified by the instruction, and specifically, to implement functions of the instruction. The write back operation is to write, back to a register, result data of the instruction run by the execute operation, to allow the result data to be quickly accessed for subsequent instructions. Therefore, it can be seen from an instruction processing mode of the superscalar network processor that, dependency between instructions of the superscalar network processor is low, and instruction execution efficiency is high.

However, in the superscalar network processor, an instruction parallelism degree is low, an instruction processing latency is large, and independent fetching and scheduling of instructions performed on the execution pipelines involves complex peripheral logic.

In addition, a very long instruction word (very long instruction word, VLIW) network processor is provided. A very long instruction word network processor architecture is an instruction level parallel (instruction level parallel, ILP) processor system. Compared with the superscalar network processor, the very long instruction word network processor implements parallel execution of a plurality of instructions in another manner. Specifically, scheduling of the very long instruction word network processor has been determined to be completed in a program compilation phase. During scheduling, the very long instruction word network processor may pack instructions with low dependency in the plurality of instructions, to generate a very long instruction word.

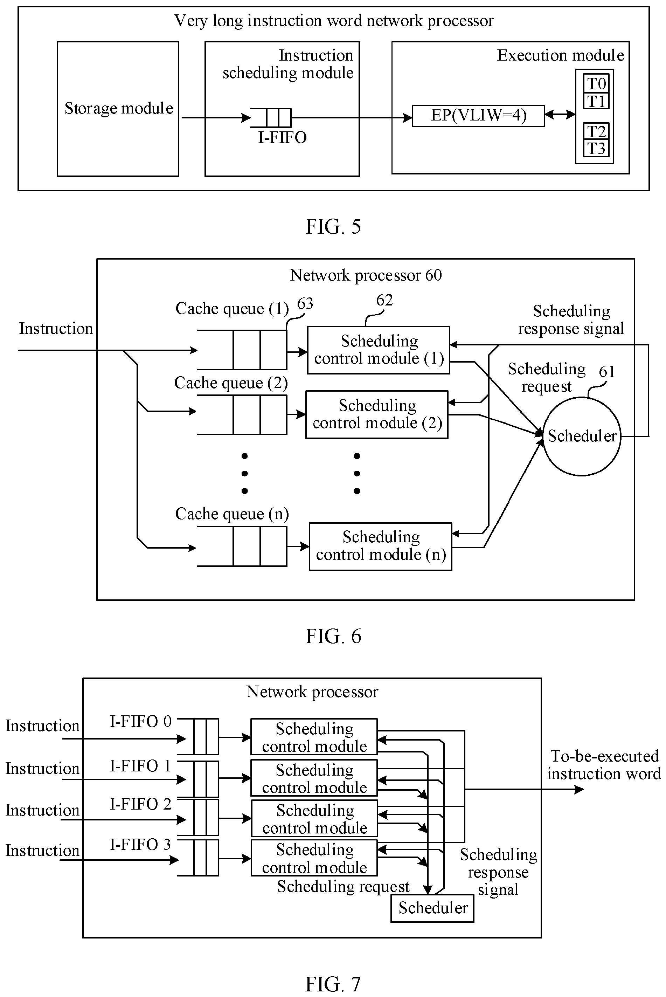

FIG. 5 is a diagram of a structure of a very long instruction word network processor according to an embodiment of this application. The very long instruction word network processor includes a storage module, an instruction scheduling module, and an execution module. The storage module may be a memory or a cache, and the storage module is configured to store instructions. After obtaining the instruction from the storage module, a thread-based program counter caches the instruction into an I-FIFO of the instruction scheduling module. When the I-FIFO is non-empty, the instruction is scheduled from the I-FIFO and then dispatched to a corresponding EP for execution. The EP supports a plurality of (for example, four) threads, for example, T0, T1, T2, and T3, but only one thread is executing the instruction at a time.

Because determining of out-of-order execution is performed by a compiler, the very long instruction word network processor does not need complex scheduling hardware. Therefore, compared with a superscalar network processor, the very long instruction word network processor can provide a stronger processing capability and reduce hardware complexity. A very long instruction word architecture may be understood as single instruction multiple data. In this architecture, an instruction level parallelism degree is high, and a processing latency is low. In addition, only one execution pipeline is used to fetch the instruction. Therefore, logic for instruction and data scheduling is simple.

However, in the very long instruction word network processor, high dependency between instructions leads to a low instruction packing rate and a need of complex network processor logic. As a result, there is a high risk of a conflict between instructions, and complexity of the network processor is increased.

In view of this, this application provides a network processor. The network processor may support a plurality of scheduling modes (for example, support both a superscalar scheduling mode and a very long instruction word scheduling mode), and flexibly select a scheduling mode based on an instruction. For example, for instructions with high inter-instruction dependency, the superscalar scheduling mode may be used to improve instruction execution efficiency. For instructions with low inter-instruction dependency, a plurality of instructions may be packaged in the very long instruction word scheduling mode, to reduce an instruction execution latency. Therefore, the network processor provided in this application may provide an adaptive scheduling mode of an instruction, so that the instruction execution efficiency can be improved, and the instruction execution latency can be reduced.

The network processor in this application may be used in, for example, a network device such as a switch, a router, or a modem.

The following further describes the network processor provided in this application.

FIG. 6 is a diagram of a structure of a network processor according to an embodiment of this application. The network processor 60 includes a scheduler 61, a plurality of scheduling control modules 62, and a plurality of cache queues 63. The plurality of scheduling control modules 62 are in one-to-one correspondence with the plurality of cache queues 63. FIG. 6 shows n scheduling control modules 62, for example, a scheduling control module (1), a scheduling control module (2), ..., and a scheduling control module (n), and shows n cache queues 63, for example, a cache queue (1), a cache queue (2), ..., and a cache queue (n). The scheduling control module (1) corresponds to the cache queue (1), and so on. An output end of each cache queue 63 is coupled to a first input end of a corresponding scheduling control module 62. An output end of each scheduling control module 62 is coupled to an input end of the scheduler 61. An output end of the scheduler 61 is coupled to a second input end of the scheduling control module 62.

The plurality of scheduling control modules 62 are configured to separately obtain a first quantity of instructions from one of a plurality of non-empty cache queues 63, and generate a scheduling request based on first indication information of the first quantity of instructions in each non-empty cache queue 63, to obtain a plurality of scheduling requests. Each of the plurality of scheduling requests corresponds to one non-empty cache queue 63. The first indication information indicates a scheduling mode of the first quantity of instructions. In addition, the plurality of scheduling control modules 62 are further configured to send the plurality of scheduling requests to the scheduler 61.

For example, the cache queue 63 may be a first input first output queue, and may be configured to temporarily store an instruction. The cache queue 63 may also be referred to as an instruction first input first output (I-FIFO) queue. In this application, if an instruction is stored in the cache queue 63, the cache queue 63 is a non-empty cache queue.

For example, the first quantity may be a quantity of packed instructions corresponding to a very long instruction word scheduling mode. In a possible example, the first quantity may be 4. To be specific, when running in the very long instruction word scheduling mode, the network processor 60 packs four instructions into one very long instruction word.

For example, the first indication information indicates the scheduling mode of the first quantity of instructions, where the scheduling mode of the first quantity of instructions may include a superscalar scheduling mode and the very long instruction word scheduling mode. In a possible example, if the first indication information is a first value (for example, 0), the scheduling mode of the first quantity of instructions is the superscalar scheduling mode; or if the first indication information is a second value (for example, 1), the scheduling mode of the first quantity of instructions is the very long instruction word scheduling mode. The first indication information may also be referred to as associated control information. When receiving an instruction, the network processor 60 also receives first indication information of the instruction.

For example, when instructions are stored in the cache queue 63, the scheduling control module 62 reads the first quantity of instructions from the cache queue 63, then parses the first quantity of instructions, and sends the scheduling request to the scheduler 61 based on the first indication information of the first quantity of instructions. The scheduling request may include a superscalar scheduling request and a very long instruction word scheduling request. If the first indication information indicates that the scheduling mode of the first quantity of instructions is the superscalar scheduling mode, the scheduling control module 62 generates the superscalar scheduling request. If the first indication information indicates that the scheduling mode of the first quantity of instructions is the very long instruction word scheduling mode, the scheduling control module 62 generates the very long instruction word scheduling request.

The scheduler 61 is configured to respond to the plurality of scheduling requests and send at least one scheduling response signal to at least one scheduling control module 62, where the scheduling response signal indicates a to-be-scheduled target cache queue and a target scheduling mode of the first quantity of instructions.

For example, if the scheduler 61 receives a plurality of superscalar scheduling requests of the plurality of scheduling control modules 62, the scheduler 61 may send a scheduling response signal to each scheduling control module 62 that initiates the superscalar scheduling request. The scheduling response signals indicate the plurality of scheduling control modules 62 that initiate the superscalar scheduling requests to schedule instructions in the superscalar scheduling mode. In other words, cache queues 63 corresponding to the plurality of scheduling control modules 62 that initiate the superscalar scheduling requests are all the target cache queue, and the target scheduling mode is the superscalar scheduling mode. If the scheduler 61 receives a plurality of superscalar scheduling requests and a plurality of very long instruction word scheduling requests from the plurality of scheduling control modules 62 at the same time, the scheduler 61 may send a scheduling response signal to one of the scheduling control modules 62 that initiate the very long instruction word scheduling requests. The scheduling response signal indicates the scheduling control module 62 to schedule an instruction in the very long instruction word scheduling mode. In other words, a cache queue 63 corresponding to one of the scheduling control modules 62 that initiate the very long instruction word scheduling requests is the target cache queue, and the target scheduling mode is the very long instruction word scheduling mode. In this way, the scheduler 61 responds to the scheduling requests sent by the plurality of scheduling control modules 62, so that an efficient scheduling mode can be provided, thereby improving instruction execution efficiency.

The at least one scheduling control module 62 is further configured to respond to the at least one scheduling response signal, and generate a to-be-executed instruction word based on the first quantity of instructions in the target cache queue and the target scheduling mode.

For example, the instruction word may include a superscalar instruction word and a very long instruction word. If the target scheduling mode is the superscalar scheduling mode, the plurality of scheduling control modules 62 may generate to-be-executed superscalar instruction words based on the first quantity of instructions and the superscalar scheduling mode. If the target scheduling mode is the very long instruction word scheduling mode, the plurality of scheduling control modules 62 may generate to-be-executed very long instruction words based on the first quantity of instructions and the very long instruction word scheduling mode.

Optionally, the scheduling mode includes the superscalar scheduling mode, the scheduling response signal includes a superscalar scheduling response signal, and the superscalar scheduling response signal indicates that the target scheduling mode is the superscalar scheduling mode. When scheduling modes corresponding to the plurality of scheduling requests are all the superscalar scheduling mode, the scheduler 61 is specifically configured to respond to the plurality of scheduling requests and send a plurality of superscalar scheduling response signals to the plurality of scheduling control modules 62.

For example, the scheduling response signal may be represented as GNT=(v, m). If v=1, it indicates that the scheduling control module 62 that initiates the scheduling request is scheduled; or if v=0, it indicates that the scheduling control module 62 that initiates the scheduling request is not scheduled. If m=1, it indicates that the scheduling mode is the very long instruction word scheduling mode; or if m=0, it indicates that the scheduling mode is the superscalar scheduling mode. In a possible example, the superscalar scheduling response signal may be represented as GNT=2'b10, which indicates that the superscalar scheduling response signal includes two bits (bits, b), where a value of v is 1, and a value of m is 0.

For example, if a plurality of scheduling control modules 62 initiate the plurality of scheduling requests, and the scheduling modes corresponding to the plurality of scheduling requests are all the superscalar scheduling mode, the scheduler 61 responds to the plurality of scheduling requests of the plurality of scheduling control modules 62 at the same time, and sends the superscalar scheduling response signals to the plurality of scheduling control modules 62.

Optionally, the instruction word includes the superscalar instruction word, and the scheduling control module 62 is specifically configured to respond to the plurality of superscalar scheduling response signals, and generate the to-be-executed superscalar instruction word based on the first quantity of instructions in the target cache queue and the superscalar scheduling mode. A quantity of instructions in the superscalar instruction word is the same as the first quantity, a location of a valid instruction in the superscalar instruction word corresponds to an identifier of the target cache queue, and an instruction other than the valid instruction in the superscalar instruction word is a no-operation instruction.

For example, it is assumed that the cache queue 63 includes four I-FIFOs, which are respectively an I-FIFO 0, an I-FIFO 1, an I-FIFO 2, and an I-FIFO 3. The superscalar instruction word includes four instructions, which are respectively {instruction 0, instruction 1, instruction 2, instruction 3}. A location of the instruction 0 corresponds to an identifier of the I-FIFO 0, a location of the instruction 1 corresponds to an identifier of the I-FIFO 1, a location of the instruction 2 corresponds to an identifier of the I-FIFO 2, and a location of the instruction 3 corresponds to an identifier of the I-FIFO 3.

It is assumed that the I-FIFO 0 is the target cache queue, and a scheduling control module 62 corresponding to the I-FIFO 0 responds to the superscalar scheduling response signal GNT=2'b10 and outputs a superscalar instruction word. In this case, the superscalar instruction word includes four instructions, a location of a first instruction in the four instructions is a valid instruction, and locations of a second instruction, a third instruction, and a fourth instruction in the four instructions are all no-operation instructions. The no-operation instruction is also referred to as a no-operation (NO-Operation, NOP) instruction, and the no-operation instruction may also be represented by 0. In other words, instructions output by the scheduling control module 62 corresponding to the I-FIFO 0 are {instruction, 0, 0, 0}.

Optionally, the scheduling mode includes the very long instruction word scheduling mode. When the scheduling modes corresponding to the plurality of scheduling requests include the very long instruction word scheduling mode, the scheduling requests further include instruction distribution information indicative of distribution locations of a valid instruction and a no-operation instruction in the first quantity of instructions in the cache queue.

For example, if the scheduling modes corresponding to the plurality of scheduling requests include the very long instruction word scheduling mode, the scheduling control module 62 further continues to identify the distribution locations of the valid instruction and the no-operation instruction in the first quantity of instructions, and generates the instruction distribution information. In this embodiment of this application, "p" is used to represent the instruction distribution information. In a possible example, if an instruction is a NOP instruction, p=1; or if an instruction is a non-NOP instruction, P=0. In another possible example, if an instruction is a NOP instruction, p=0; or if an instruction is a non-NOP instruction, p=1. For example, four instructions are {M1, N1, N2, M2}, where N1 and N2 are NOP instructions, M1 and M2 are non-NOP instructions, a value of the NOP instruction is 1, and a value of the non-NOP instruction is 0. In this case, p=4'b0110, which indicates that the instruction distribution information includes four bits and respectively indicates that, from left to right, a first instruction is a non-NOP instruction, a second instruction is a NOP instruction, a third instruction is a NOP instruction, and a fourth instruction is a non-NOP instruction.

The scheduling response signal includes a very long instruction word scheduling response signal, and the very long instruction word scheduling response signal indicates that the target scheduling mode is the very long instruction word scheduling mode. The scheduler 61 is specifically configured to respond to the scheduling request and send the very long instruction word scheduling response signal to the scheduling control module 62.

For example, the scheduling request may be represented as request=(d, p), where d represents the scheduling mode, and p represents the instruction distribution information. If d=1, the scheduling mode is the very long instruction word scheduling mode; or if d=0, the scheduling mode is the superscalar scheduling mode. Optionally, the cache queue 63 may further send cache queue indication information to the scheduling control module 62. If the cache queue indication information is a first value (for example, 0), it indicates that the cache queue 63 is an empty cache queue. If the cache queue indication information is a second value (for example, 1), it indicates that the cache queue 63 is a non-empty cache queue.

In a possible example, the very long instruction word scheduling response signal may be represented as GNT=2'b11, which indicates that the very long instruction word scheduling response signal includes two bits, where a value of v is 1, and a value of m is 1.

Optionally, if the plurality of scheduling control modules 62 initiate the plurality of scheduling requests, and the scheduling modes corresponding to the plurality of scheduling requests include both the superscalar scheduling mode and the very long instruction word scheduling mode, the scheduler 61 preferentially responds to the scheduling request initiated by the scheduling control module 62 that sends the very long instruction word scheduling mode. In other words, an instruction of which the scheduling mode is the very long instruction word scheduling mode is preferentially executed. In this way, an instruction level parallelism degree is high, and a processing latency is low.

Optionally, the instruction word includes the very long instruction word. When a first scheduling request corresponding to a first cache queue in the target cache queue indicates that a scheduling mode of the first cache queue is the very long instruction word scheduling mode, the scheduler 61 is further configured to: when instruction distribution information of the first scheduling request indicates that there is a no-operation instruction, respond to a second scheduling request corresponding to a second cache queue in the target cache queue and send a superscalar scheduling response signal to a scheduling control module 62 corresponding to the second cache queue. The scheduling control module 62 is further configured to perform a shift (shift) operation and/or an OR (OR) operation on an instruction in the first cache queue and an instruction in the second cache queue, to generate a to-be-executed very long instruction word.

For example, when both the first cache queue and the second cache queue are non-empty cache queues, a scheduling mode corresponding to the first quantity of instructions stored in the first cache queue is the very long instruction word scheduling mode, and a scheduling mode corresponding to the first quantity of instructions stored in the second cache queue is the superscalar scheduling mode, the scheduler 61 responds to a scheduling request sent by a scheduling control module 62 corresponding to the first cache queue. The scheduler 61 sends a very long instruction word scheduling signal to the scheduling control module 62 corresponding to the first cache queue. When there is a no-operation instruction in the instructions stored in the first cache queue, to improve instruction execution efficiency, the scheduler 61 may respond to a scheduling request sent by the scheduling control module 62 corresponding to the second cache queue. The scheduler 61 sends the superscalar scheduling response signal to the scheduling control module 62 corresponding to the second cache queue.

For example, FIG. 7 is a schematic flowchart of scheduling performed by a network processor according to an embodiment of this application. Four cache queues 63 and four scheduling control modules 62 are used as an example. An I-FIFO receives an instruction from a previous-stage module. It is assumed that an I-FIFO 0 is a first cache queue, an I-FIFO 1 is a second cache queue, a scheduling mode of instructions stored in the I-FIFO 0 is a very long instruction word scheduling mode, and a scheduling mode of instructions stored in the I-FIFO 1 may be the very long instruction word scheduling mode, or may be a superscalar scheduling mode. A scheduling control module 62 corresponding to the I-FIFO 0 reads four instructions from the I-FIFO 0, then parses the four instructions to obtain instruction distribution information, p=4'b0110, of the four instructions, and sends, to a scheduler 61 based on first indication information, a scheduling request, request=5'b10110, which indicates that the scheduling request includes five bits, where a value of d is 1, meaning that the scheduling mode corresponding to the scheduling request is the very long instruction word scheduling mode, and a value of p is 0110, meaning that from left to right, a first instruction is a non-NOP instruction, a second instruction is a NOP instruction, a third instruction is a NOP instruction, and a fourth instruction is a non-NOP instruction. After receiving the scheduling request, the scheduler 61 sends a very long instruction word scheduling response signal to the scheduling control module 62. The very long instruction word scheduling response signal is GNT=2'b11. The scheduling control module corresponding to the I-FIFO 0 outputs a very long instruction word. In this case, the very long instruction word includes four instructions. If there is a no-operation instruction in the four instructions, to improve instruction execution efficiency, the scheduler 61 may further send a superscalar scheduling response signal to a scheduling control module corresponding to the I-FIFO 1, and the scheduling control module corresponding to the I-FIFO 1 outputs a superscalar instruction word. The scheduling control module 62 may shift the superscalar instruction word based on the instruction distribution information, then perform an OR operation on the very long instruction word and the superscalar instruction word to obtain a very long instruction word whose instructions are all valid instructions, and send the very long instruction word whose instructions are all valid instructions to threads corresponding to the I-FIFO 0 and the I-FIFO 1 for execution.

At the same time, the scheduling control module 62 further sends thread identities (identities, IDs) to the threads, where each instruction corresponds to one thread identity, and a thread may determine, based on the thread identity, the instruction processed by the thread. Four threads (T0, T1, T2, and T3) are used as an example. Two bits may be used to represent the thread identity. For example, if a thread identity of an instruction is 2'b00, the instruction is sent to T0; if a thread identity of an instruction is 2'b01, the instruction is sent to T1; if a thread identity of an instruction is 2'b10, the instruction is sent to T2; and if a thread identity of an instruction is 2'b11, the instruction is sent to T3.

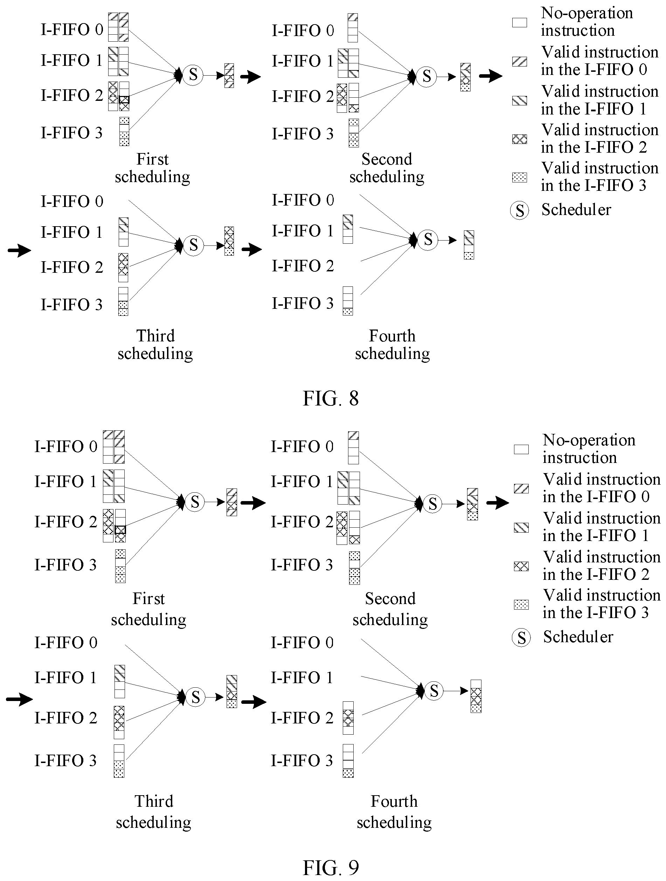

Specifically, four cache queues (the I-FIFO 0, the I-FIFO 1, an I-FIFO 2, and an I-FIFO 3) and four threads (T0, T1, T2, and T3) are used as an example. The I-FIFO 0 corresponds to T0, the I-FIFO 1 corresponds to T1, the I-FIFO 2 corresponds to T2, and the I-FIFO 3 corresponds to T3. FIG. 8 is a flowchart of a very long instruction word scheduling mode according to an embodiment of this application. FIG. 8 shows seven very long instruction words stored in an I-FIFO 0, an I-FIFO 1, an I-FIFO 2, and an I-FIFO 3, where each very long instruction word includes four instructions. The seven very long instruction words need to be scheduled for four times. First scheduling includes: scheduling instructions in the I-FIFO 0. The instructions in the I-FIFO 0 are scheduled in the very long instruction word mode. A very long instruction word obtained based on the instructions in the I-FIFO 0 is {instruction A, instruction B, 0, instruction C}. Because an instruction that is at a location corresponding to the I-FIFO 2 and that is in the very long instruction word obtained based on the instructions in the I-FIFO 0 is a no-operation instruction, the scheduler 61 sends a superscalar scheduling response signal to a scheduling control module corresponding to the I-FIFO 2. A superscalar instruction word obtained based on instructions in the I-FIFO 2 is {0, 0, instruction D, 0}. In this case, an OR operation is performed on the superscalar instruction word obtained based on the instructions in the I-FIFO 2 and the very long instruction word obtained based on the instructions in the I-FIFO 0, to obtain a to-be-executed very long instruction word, that is, {instruction A, instruction B, instruction D, instruction C}, where all instructions in the very long instruction word are valid instructions. The scheduling control module 62 separately sends the very long instruction word to T0 and T2 for execution, where T0 executes the instruction A, the instruction B, and the instruction C, and T2 executes the instruction D.

Second scheduling may include: scheduling the instructions in the I-FIFO 0. Because the instructions in the I-FIFO 0 include only one valid instruction, the instructions in the I-FIFO 0 are scheduled in a superscalar scheduling mode. A superscalar instruction word obtained based on the instructions in the I-FIFO 0 is {instruction E, 0, 0, 0}. Because instructions that are at locations corresponding to the I-FIFO 1, the I-FIFO 2, and the I-FIFO 3 and that are in the superscalar instruction word obtained based on the instructions in the I-FIFO 0 are all no-operation instructions, the scheduler 61 respectively sends superscalar scheduling response signals to scheduling control modules respectively corresponding to the I-FIFO 1, the I-FIFO 2, and the I-FIFO 3. A superscalar instruction word obtained based on instructions in the I-FIFO 1 is {0, 0, 0, instruction F}, a superscalar instruction word obtained based on the instructions in the I-FIFO 2 is {0, 0, 0, instruction G}, and a superscalar instruction word obtained based on instructions in the I-FIFO 3 is {instruction H, 0, 0, 0}. In this case, a shift operation is separately performed on the superscalar instruction word obtained based on the instructions in the I-FIFO 1, the superscalar instruction word obtained based on the instructions in the I-FIFO 2, and the superscalar instruction word obtained based on the instructions in the I-FIFO 3. A superscalar instruction word obtained based on the instructions in I-FIFO 1 is {0, instruction F, 0, 0}, a superscalar instruction word obtained based on the instructions in the I-FIFO 2 is {0, 0, instruction G, 0}, and a superscalar instruction word obtained based on the instructions in the I-FIFO 3 is {0, 0, 0, instruction H}. Then, an OR operation is performed on the superscalar instruction word obtained based on the instructions in the I-FIFO 0, the superscalar instruction word obtained based on the instructions in the I-FIFO 1, the superscalar instruction word obtained based on the instructions in the I-FIFO 2, and the superscalar instruction word obtained based on the instructions in the I-FIFO 3, to obtain a to-be-executed very long instruction word, that is, {instruction E, instruction F, instruction G, instruction H}, where all instructions in the very long instruction word are valid instructions. The scheduling control module 62 separately sends the very long instruction word to T0, T1, T2, and T3 for execution, where T0 executes the instruction E, T1 executes the instruction F, T2 executes the instruction G, and T3 executes the instruction H.

Third scheduling may include: scheduling the instructions in the I-FIFO 2. The instructions in the I-FIFO 2 are scheduled in the very long instruction word scheduling mode. A very long instruction word obtained based on the instructions in the I-FIFO 2 is {instruction I, instruction J, instruction K, 0}. Because an instruction that is at a location corresponding to the I-FIFO 3 and that is in the very long instruction word obtained based on the instructions in the I-FIFO 2 is a no-operation instruction, the scheduler 61 sends a superscalar scheduling response signal to the scheduling control module corresponding to the I-FIFO 3. A superscalar instruction word obtained based on the instructions in the I-FIFO 3 is {0, 0, instruction L, 0}. In this case, a shift operation is performed on the superscalar instruction word obtained based on the instructions in the I-FIFO 3. A superscalar instruction word obtained based on the instructions in the I-FIFO 3 is {0, 0, 0, instruction L}. Then, an OR operation is performed on the very long instruction word obtained based on the instructions in the I-FIFO 2 and the superscalar instruction word obtained based on the instructions in the I-FIFO 3, to obtain a to-be-executed very long instruction word, that is, {instruction I, instruction J, instruction K, instruction L}, where all instructions in the very long instruction word are valid instructions. The scheduling control module 62 separately sends the very long instruction word to T2 and T3 for execution, where T2 executes the instruction I, the instruction J, and the instruction K, and T3 executes the instruction L.

Fourth scheduling may include: scheduling the instructions in the I-FIFO 1. The instructions in the I-FIFO 1 are scheduled in the very long instruction word scheduling mode. A very long instruction word obtained based on the instructions in the I-FIFO 1 is {instruction M, instruction N, 0, 0}. Because an instruction that is at a location corresponding to the I-FIFO 3 and that is in the very long instruction word obtained based on the instructions in the I-FIFO 1 is a no-operation instruction, the scheduler 61 sends a superscalar scheduling response signal to the scheduling control module corresponding to the I-FIFO 3. A superscalar instruction word obtained based on the instructions in the I-FIFO 3 is {0, 0, 0, instruction O}. In this case, an OR operation is performed on the very long instruction word obtained based on the instructions in the I-FIFO 1 and the superscalar instruction word obtained based on the instructions in the I-FIFO 3, to obtain a to-be-executed very long instruction word, that is, {instruction M, instruction N, 0, instruction O}. The scheduling control module 62 separately sends the very long instruction word to T1 and T3 for execution, where T1 executes the instruction M and the instruction N, and T3 executes the instruction O. In this way, scheduling of the seven very long instruction words can be implemented based on four times of scheduling.

It may be understood that a scheduling sequence of the instructions in the I-FIFO 0, the I-FIFO 1, the I-FIFO 2, and the I-FIFO 3 is not specifically limited in this application. In a possible example, FIG. 9 is a flowchart of another very long instruction word scheduling mode according to an embodiment of this application. First scheduling may be the same as second scheduling, and details are not described herein again. Third scheduling may be scheduling instructions in an I-FIFO 1. The instructions in the I-FIFO 1 are scheduled in the very long instruction word scheduling mode. A very long instruction word obtained based on the instructions in the I-FIFO 1 is {instruction M, instruction N, 0, 0}. Because instructions that are at locations corresponding to an I-FIFO 2 and an I-FIFO 3 and that are in the very long instruction word obtained based on the instructions in the I-FIFO 1 are no-operation instructions, a scheduler 61 respectively sends superscalar scheduling response signals to the scheduling control modules respectively corresponding to the I-FIFO 2 and the I-FIFO 3. A superscalar instruction word obtained based on instructions in the I-FIFO 2 is {instruction I, 0, 0, 0}, and a superscalar instruction word obtained based on instructions in the I-FIFO 3 is {0, 0, instruction L, 0}. In this case, a shift operation is separately performed on the superscalar instruction word obtained based on the instructions in the I-FIFO 2 and the superscalar instruction word obtained based on the instructions in the I-FIFO 3. A superscalar instruction word obtained based on the instructions in the I-FIFO 2 is {0, 0, instruction I, 0}, and a superscalar instruction word obtained based on the instructions in the I-FIFO 3 is {0, 0, 0, instruction L}. Then, an OR operation is performed on the very long instruction word obtained based on the instructions in the I-FIFO 1, the superscalar instruction word obtained based on the instructions in the I-FIFO 2, and the superscalar instruction word obtained based on the instructions in the I-FIFO 3, to obtain a to-be-executed very long instruction word, that is, {instruction M, instruction N, instruction I, instruction L}, where all instructions in the very long instruction word are valid instructions. The scheduling control module 62 separately sends the very long instruction word to T1, T2, and T3 for execution, where T1 executes the instruction M and the instruction N, T2 executes the instruction I, and T3 executes the instruction L.

Correspondingly, fourth scheduling may include: scheduling the instructions in the I-FIFO 2. The instructions in the I-FIFO 2 are scheduled in the very long instruction word scheduling mode. A very long instruction word obtained based on the instructions in the I-FIFO 2 is {0, instruction J, instruction K, 0}. Because an instruction that is at a location corresponding to the I-FIFO 3 and that is in the very long instruction word obtained based on the instructions in the I-FIFO 2 is a no-operation instruction, the scheduler 61 sends a superscalar scheduling response signal to the scheduling control module corresponding to the I-FIFO 3. A superscalar instruction word obtained based on the instructions in the I-FIFO 3 is {0, 0, 0, instruction O}. In this case, an OR operation is performed on the very long instruction word obtained based on the instructions in the I-FIFO 2 and the superscalar instruction word obtained based on the instructions in the I-FIFO 3, to obtain a to-be-executed very long instruction word, that is, {0, instruction J, instruction K, instruction O}. The scheduling control module 62 separately sends the very long instruction word to T2 and T3 for execution, where T2 executes the instruction J and the instruction K, and T3 executes the instruction O. In this way, scheduling of seven very long instruction words can be implemented based on four times of scheduling.

Therefore, for the seven very long instruction words, if a very long instruction word network processor is used, seven clock cycles are required to execute the instructions, but if the network processor provided in this embodiment of this application is used, only four clock cycles are required to execute the instructions, so that instruction execution efficiency is greatly improved.

Optionally, a plurality of cache queues 63 are configured to cache received instructions into target queues based on received second indication information. The second indication information indicates identifiers of target cache queues of the instructions.

For example, the identifiers of the target cache queues may be the I-FIFO 0, the I-FIFO 1, the I-FIFO 2, and the I-FIFO 3. The second indication information may also be associated control information. When receiving an instruction, a network processor 60 also receives second indication information of the instruction. In a possible example, two bits may be used to represent the second indication information. For example, if the second indication information is 2'b00, the instruction is stored in the I-FIFO 0; if the second indication information is 2'b01, the instruction is stored in the I-FIFO 1; if the second indication information is 2'b10, the instruction is stored in the I-FIFO 2; or if the second indication information is 2'b11, the instruction is stored in the I-FIFO 3.

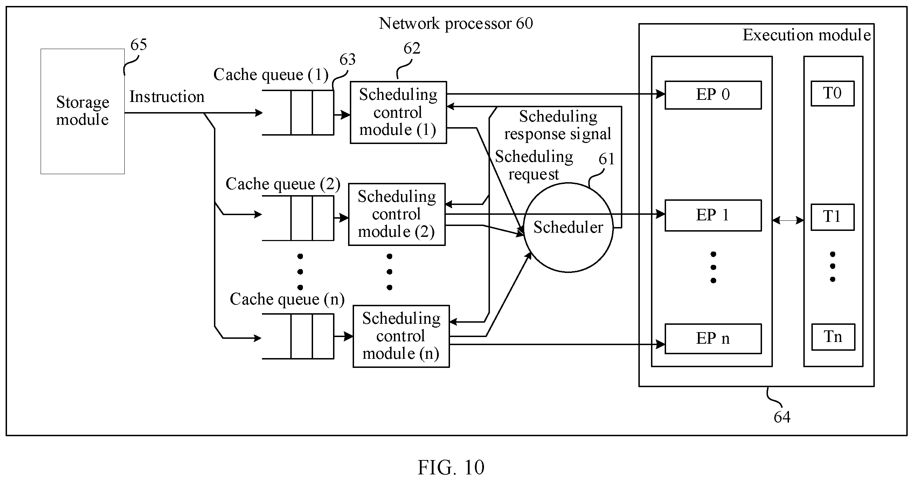

Optionally, FIG. 10 is a diagram of a structure of another network processor according to an embodiment of this application. The network processor 60 may further include an execution module 64, where the execution module 64 is configured to execute a to-be-executed instruction word. The to-be-executed instruction word may be the superscalar instruction word or the very long instruction word generated in FIG. 8 or FIG. 9. An input end of the execution module 64 is coupled to an output end of a scheduling control module 62. FIG. 10 shows n EPs, which are respectively an EP 1, an EP 2, ..., and an EP n, and shows n threads, which are respectively T1, T2, ..., and Tn. The EPs is in one-to-one correspondence with the threads.

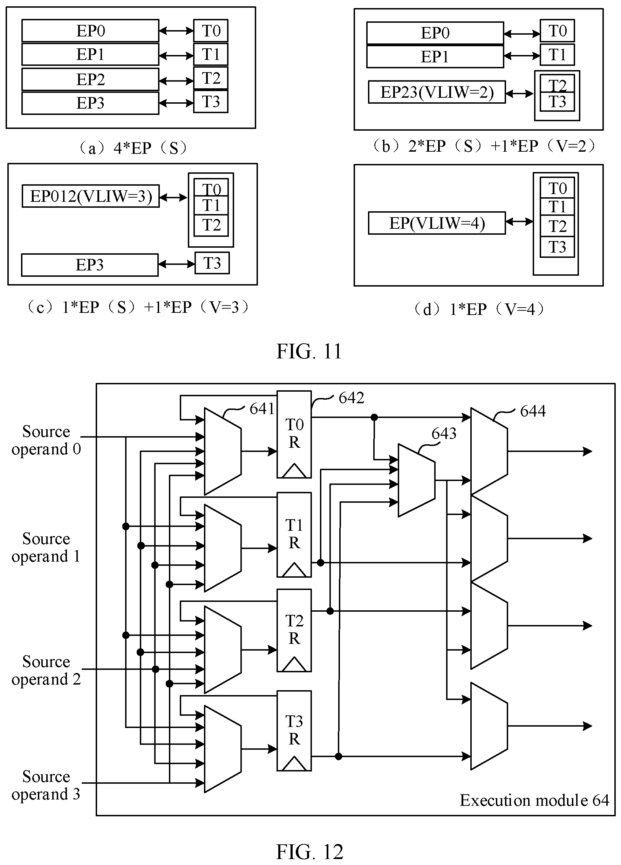

The execution module 64 may support a plurality of modes. FIG. 11 is a diagram of an execution module in different modes according to an embodiment of this application. For example, the execution module 64 includes four execution pipelines (an EP 0, an EP 1, an EP 2, and an EP 3). Each execution pipeline corresponds to one thread. In other words, the four execution pipelines correspond to four threads (T0, T1, T2, and T3). A scheduling mode may include: a superscalar scheduling mode, a very long instruction word scheduling mode, and a hybrid scheduling mode, where the hybrid scheduling mode includes both the superscalar scheduling mode and the very long instruction word scheduling mode. (a) of FIG. 11 shows the superscalar scheduling mode, that is, 4*EP(S), where "S" represents the superscalar scheduling mode. Instructions in the EP 0, the EP 1, the EP 2, and the EP 3 are assigned, based on the superscalar scheduling mode, to corresponding T0, T1, T2, and T3 for execution. (b) of FIG. 11 shows a hybrid scheduling mode, that is, 2*EP(S)+1*EP(V=2), where "V" represents the very long instruction word scheduling mode. Instructions in the EP 0 and the EP 1 are assigned, based on the superscalar scheduling mode, to corresponding T0 and T1 for execution, and instructions in the EP 2 and the EP 3 are packed to generate a very long instruction word including two instructions. The very long instruction word is assigned to corresponding T2 and T3 for execution. (c) of FIG. 11 shows another hybrid scheduling mode, that is, 1*EP(S)+1*EP(V=3). Instructions in the EP 0, the EP 1, and the EP 2 are packed to generate a very long instruction word including three instructions. The very long instruction word is assigned to one of the corresponding threads T0, T1, and T2 for execution. An instruction in the EP 3 is assigned, based on the superscalar scheduling mode, to corresponding T3 for execution. (d) of FIG. 11 shows the very long instruction word scheduling mode, that is, 1*EP (V=4). Instructions in the EP 0, the EP 1, the EP 2, and the EP 3 are packed to generate a very long instruction word including four instructions, and the very long instruction word is assigned to one of the corresponding threads T0, T1, T2, and T3 for execution.

Optionally, the execution module 64 includes a plurality of first multiplexers (multiplexers, MUXs), a plurality of registers (registers), a second multiplexer, and a plurality of third multiplexers. The plurality of first multiplexers are in one-to-one correspondence with the plurality of registers, and the plurality of registers are in one-to-one correspondence with the plurality of third multiplexers. An output end of each first multiplexer is coupled to an input end of a corresponding register, output ends of the plurality of registers are respectively coupled to input ends of the second multiplexer, an output end of each register is further coupled to a first input end of a corresponding third multiplexer, and an output end of the second multiplexer is further coupled to a second input end of the third multiplexer. The second multiplexer is configured to obtain an operand of an instruction in a to-be-executed very long instruction word, and the third multiplexer is configured to determine, from the operand of the instruction in the to-be-executed very long instruction word obtained by the second multiplexer and an operand of an instruction in a superscalar instruction word, a to-be-executed operand corresponding to a thread.

FIG. 12 is a diagram of a structure of an execution module according to an embodiment of this application. FIG. 12 shows four first multiplexers 641, four registers 642, a second multiplexer 643, and four third multiplexers 644. The four registers 642 are respectively T0R, T1R, T2R, and T3R. Each first multiplexer 641 includes a plurality of input ends. For example, the first multiplexer 641 includes five input ends. Data stored in the register, a source operand 1, a source operand 2, a source operand 3, and a source operand 4 are respectively input to the five input ends. The first multiplexer 641 is configured to determine, from the data stored in the register and the plurality of source operands, a source operand to be written into the register 642. The register 642 is configured to temporarily store the source operand.

The second multiplexer 643 may include four input ends, and the third multiplexer 644 may include a first input end and a second input end. In a possible example, when any thread in the execution module executes an instruction, the second multiplexer 643 determines, from the four registers 642 based on a thread identity of the instruction, a source operand corresponding to the thread, and the third multiplexer 644 determines that a source operand input by the second input end is a source operand to be executed by the corresponding thread. In another possible example, when any thread in the execution module executes an instruction, the third multiplexer 644 determines, based on a thread identity of the instruction, that a source operand input by the first input end is a source operand to be executed by the corresponding thread. In a possible example, if an instruction to be executed by T0 is an addition instruction, the addition instruction includes addresses of a source operand 1 and a source operand 2 on which an addition operation is to be performed, and a scheduling mode of the addition instruction is a superscalar scheduling mode, T0 may find the source operand 1 from the register based on the address of the source operand 1, and find the source operand 2 from the register based on the address of the source operand 2. After performing the addition operation on the source operand 1 and the source operand 2, T0 generates a destination operand, and writes the destination operand into a storage module.

Still refer to FIG. 10. The network processor 60 may further include a storage module 65. The storage module 65 is configured to store a plurality of instructions. A cache queue 63 receives the instructions from the storage module 65. For example, the cache queue 63 receives four instructions from the storage module in each clock cycle (clock cycle).

Optionally, if a storage address of the instruction in the storage module 65 is within a first address range, a scheduling mode of the instruction indicated by first indication information is a superscalar scheduling mode. If a storage address of the instruction in the storage module 65 is within a second address range, a scheduling mode of the instruction indicated by first indication information is a very long instruction word scheduling mode.

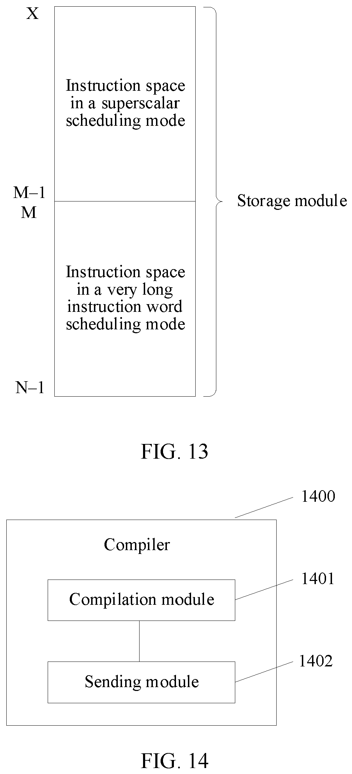

FIG. 13 is a diagram of storage of a storage module according to this application. First indication information may be address information of an instruction, and a storage address may also be understood as a physical address of the storage module 65. It is assumed that the storage module 65 includes instruction space in a superscalar scheduling mode and instruction space in a very long instruction word scheduling mode, and an address range of the storage module 65 is X to N-1, where a first address range may be X to M-1, and a second address range may be M to N-1. To be specific, an address range of the instruction space in the superscalar scheduling mode is X to M-1, and an address range of the instruction space in the very long instruction word scheduling mode is M to N-1.

Optionally, if the first indication information is a first value, a scheduling mode of the instruction indicated by the first indication information is the superscalar scheduling mode. If the first indication information is a second value, a scheduling mode of an instruction indicated by the first indication information is the very long instruction word scheduling mode.

For example, the first indication information may be tag information of an instruction. In an example, the first value may be 0, and the second value may be 1. To be specific, if the first indication information is 0, a scheduling mode of a first quantity of instructions is the superscalar scheduling mode; or if the first indication information is 1, a scheduling mode of a first quantity of instructions is the very long instruction word scheduling mode. In another example, the first value may be 1, and the second value may be 0. To be specific, if the first indication information is 1, a scheduling mode of a first quantity of instructions is the superscalar scheduling mode; or if the first indication information is 0, a scheduling mode of a first quantity of instructions is the very long instruction word scheduling mode.

The following describes a compiler for generating the first indication information.

FIG. 14 is a diagram of a structure of a compiler according to an embodiment of this application. The compiler 1400 may include a compilation module 1401 and a sending module 1402. The compilation module 1401 is configured to compile an instruction based on a compilation requirement corresponding to the instruction, to obtain a compiled instruction and first indication information. The first indication information indicates a scheduling mode of the compiled instruction. The sending module 1402 is configured to send the compiled instruction and the first indication information to a network processor, for example, to a storage module of the network processor, so as to store the compiled instruction in the storage module of the network processor.

Optionally, the compilation requirement may be a compilation mode, and the compilation mode includes a superscalar compilation mode and a very long instruction word compilation mode. If the compilation requirement of the instruction is the superscalar compilation mode, the first indication information indicates that the scheduling mode of the instruction is a superscalar scheduling mode. If the compilation requirement of the instruction is the very long instruction word compilation mode, the first indication information indicates that the scheduling mode of the instruction is a very long instruction word scheduling mode. The compiler sends the compiled instruction and the first indication information to the storage module of the network processor, where the storage module includes instruction space in the superscalar scheduling mode and instruction space in the very long instruction word scheduling mode. Specifically, the instruction space in the superscalar scheduling mode is for storing an instruction whose compilation requirement is the superscalar scheduling mode, and the instruction space in the very long instruction word scheduling mode is for storing an instruction whose compilation requirement is the very long instruction word scheduling mode.

Optionally, the compilation requirement may be determined based on a service type corresponding to the instruction. In a possible example, if a service requires large traffic, for example, a download service, an instruction corresponding to the service may be compiled in the very long instruction word compilation mode. If a service requires small traffic, for example, a monitoring service, an instruction corresponding to the service may be compiled in the superscalar compilation mode.

Software may annotate an instruction, and the compilation module 1401 may compile the instruction based on a compilation requirement of the instruction annotated by the software. The compilation requirement of the instruction may also be understood as a performance path and a non-performance path, or the compilation requirement may be determined based on a performance requirement of the instruction. The performance path is that large traffic is required for executing the instruction, and the non-performance path is that small traffic is required for executing the instruction. For the performance path, the instruction may be compiled in the very long instruction word compilation mode. For the non-performance path, the instruction may be compiled in the superscalar compilation mode. Therefore, the compiler provided in this embodiment of this application can implement hybrid compilation of a superscalar instruction word and a very long instruction word, to help improve instruction execution efficiency.

It should be noted that compiling an instruction by the compilation module 1401 based on a compilation mode corresponding to the instruction is merely one of compilation methods. The compilation module 1401 may alternatively compile the instruction in another manner. This is not limited in this embodiment of this application.

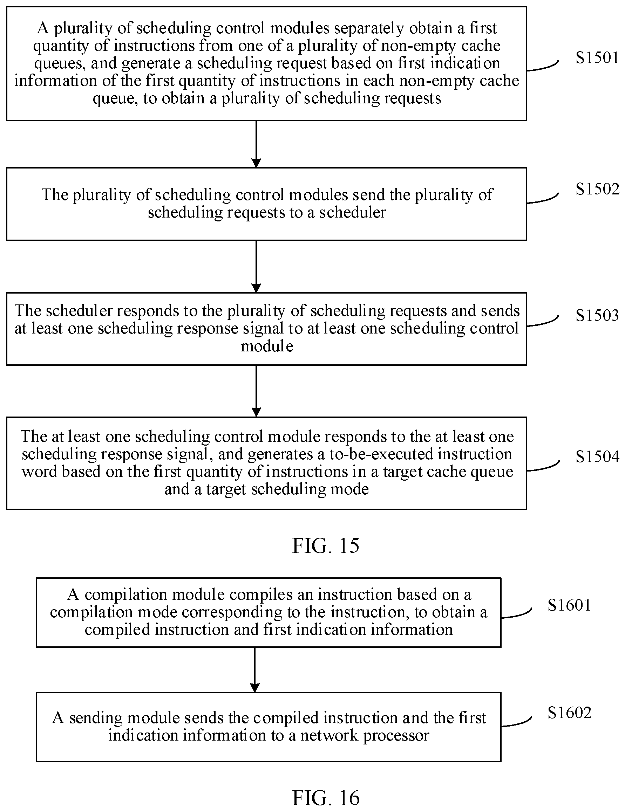

An embodiment of this application further provides an instruction scheduling method, applied to the foregoing network processor. FIG. 15 is a flowchart of an instruction scheduling method according to an embodiment of this application. The instruction scheduling method includes the following steps.

S1501: A plurality of scheduling control modules separately obtain a first quantity of instructions from one of a plurality of non-empty cache queues, and generate a scheduling request based on first indication information of the first quantity of instructions in each non-empty cache queue, to obtain a plurality of scheduling requests. The scheduling requests are corresponding to the non-empty cache queues respectively. The first indication information indicates a scheduling mode of the first quantity of instructions.

S1502: The plurality of scheduling control modules send the plurality of scheduling requests to a scheduler.

For example, for each non-empty cache queue, a corresponding scheduling control module obtains the first quantity of instructions from the non-empty cache queue, and generates the scheduling request based on the first indication information. The first indication information may indicate that the scheduling mode of the instruction is a superscalar scheduling mode, or the first indication information may indicate that the scheduling mode of the instruction is a very long instruction word scheduling mode. The network processor uses a technology of combining the superscalar scheduling mode and the very long instruction word scheduling mode, so that instruction execution efficiency can be improved, and problems of a large circuit area and high power consumption can be alleviated. For specific implementations of S1501 and S1502, refer to the foregoing descriptions about the scheduling control module.

S1503: The scheduler responds to the plurality of scheduling requests and sends at least one scheduling response signal to at least one scheduling control module. The scheduling response signal indicates a to-be-scheduled target cache queue and a target scheduling mode of the first quantity of instructions.

For example, for different scheduling requests, the scheduler responds to different scheduling response signals. If the scheduler receives superscalar scheduling requests sent by the plurality of scheduling control modules, the scheduler may send a scheduling response signal to each scheduling control module that initiates the superscalar scheduling request. If the scheduler receives a plurality of superscalar scheduling requests and a plurality of very long instruction word scheduling requests from the plurality of scheduling control modules at the same time, the scheduler may send a scheduling response signal to one of the scheduling control modules that initiate the very long instruction word scheduling requests. For a specific implementation of S1503, refer to the foregoing descriptions about the scheduler.

S1504: The at least one scheduling control module responds to the at least one scheduling response signal, and generates a to-be-executed instruction word based on the first quantity of instructions in the target cache queue and the target scheduling mode.

For example, the instruction word may include a superscalar instruction word and a very long instruction word. If the target scheduling mode is the superscalar scheduling mode, the plurality of scheduling control modules may generate to-be-executed superscalar instruction words based on the first quantity of instructions and the superscalar scheduling mode. If the target scheduling mode is the very long instruction word scheduling mode, the plurality of scheduling control modules may generate to-be-executed very long instruction words based on the first quantity of instructions and the very long instruction word scheduling mode.

Optionally, for the very long instruction word scheduling mode, S1503 may include: The scheduler responds to the scheduling request and sends a very long instruction word scheduling response signal to a scheduling control module corresponding to a scheduling request whose scheduling mode is the very long instruction word scheduling mode.

In addition, when instruction distribution information of a first scheduling request indicates that there is a no-operation instruction, the scheduler responds to a second scheduling request corresponding to a second cache queue in the target cache queue and sends a superscalar scheduling response signal to a scheduling control module corresponding to the second cache queue, and the scheduling control module performs a shift operation and/or an OR operation on an instruction in the first cache queue and an instruction in the second cache queue, to generate a to-be-executed very long instruction word.

Optionally, for the superscalar scheduling mode, S1503 may include: The scheduler responds to the plurality of scheduling requests and sends a plurality of superscalar scheduling response signals to the plurality of scheduling control modules. S1504 may include: The scheduling control modules respond to the plurality of superscalar scheduling response signals, and generate to-be-executed superscalar instruction words based on the first quantity of instructions in the target cache queue and the superscalar scheduling mode.

Optionally, before S1501, the method may further include: A plurality of cache queues cache received instructions into target cache queues based on received second indication information.

Optionally, after S1504, the method may further include: An execution module executes the to-be-executed instruction word.

The following describes a compilation method provided in this application, applied to the foregoing compiler. FIG. 16 is a flowchart of a compilation method according to this application. The method includes the following procedures.

S1601: A compilation module compiles an instruction based on a compilation requirement corresponding to the instruction, to obtain a compiled instruction and first indication information. The first indication information indicates a scheduling mode of the compiled instruction.

S1602: A sending module sends the compiled instruction and the first indication information to a network processor.

This application further provides a chip. The chip includes a network processor and a power supply circuit. The power supply circuit is configured to supply power to the network processor, and the network processor is configured to implement an instruction scheduling method.

This application further provides a computer device. The computer device includes a processor and a storage, and the storage is configured to store a set of computer instructions. When executing a set of computer instructions, the processor is configured to perform the foregoing instruction scheduling method or compilation method.

An embodiment of this application further provides an electronic device, including one or more processors and one or more storages. The one or more storages are coupled to the one or more processors. The one or more storages are configured to store computer program code. The computer program code includes computer instructions. When the one or more processors execute the computer instructions, the electronic device is enabled to perform the foregoing related method steps, to implement the instruction scheduling method or the compilation method in the foregoing embodiments.

An embodiment of this application further provides a computer storage medium. The computer storage medium stores computer instructions. When the computer instructions are run on an electronic device, the electronic device is enabled to perform the foregoing related method steps, to implement the instruction scheduling method or the compilation method in the foregoing embodiments.

An embodiment of this application further provides a computer program product. When the computer program product runs on a computer, the computer is enabled to perform the foregoing related steps, to implement the instruction scheduling method or the compilation method performed by the electronic device in the foregoing embodiments.

In addition, an embodiment of this application further provides an apparatus. The apparatus may be specifically a chip, a component, or a module. The apparatus may include a processor and a storage that are connected. The storage is configured to store computer-executable instructions, and when the apparatus runs, the processor may execute the computer-executable instructions stored in the storage, to enable the chip to perform the instruction scheduling method or the compilation method performed by the electronic device in the foregoing method embodiments.

The electronic device, the computer storage medium, the computer program product, or the chip provided in the foregoing embodiment is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

Based on the descriptions about the foregoing implementations, a person skilled in the art may understand that, for the purpose of convenient and brief description, division into the foregoing functional modules is used as an example for illustration. During actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and methods may be implemented in other manners. For example, the described apparatus embodiment is merely an example. For example, division into the modules or units is merely logical function division and may be other division during actual implementations. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between apparatuses or units may be implemented in an electronic form, a mechanical form, or another form.

The units described as separate parts may or may not be physically separate, and a part displayed as a unit may be one or more physical units, may be located in one place, or may be distributed to different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a portable hard disk drive, a read-only memory (read-only memory, ROM), a random access memory (random access memory, RAM), a magnetic disk, and an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network processor, comprising: a scheduler, a plurality of scheduling control modules, and a plurality of cache queues, wherein the plurality of scheduling control modules are in one-to-one correspondence with the plurality of cache queues;
the plurality of scheduling control modules are configured to separately obtain a first quantity of instructions from one of a plurality of non-empty cache queues, and generate a scheduling request based on first indication information of the first quantity of instructions in each non-empty cache queue, to obtain a plurality of scheduling requests, wherein each scheduling request corresponds to each non-empty cache queue, and the first indication information indicates a scheduling mode of the first quantity of instructions;
the plurality of scheduling control modules are further configured to send the plurality of scheduling requests to the scheduler;
the scheduler is configured to respond to the plurality of scheduling requests and send at least one scheduling response signal to at least one scheduling control module, wherein the scheduling response signal indicates a to-be-scheduled target cache queue and a target scheduling mode of the first quantity of instructions; and
the at least one scheduling control module is further configured to respond to the at least one scheduling response signal, and generate a to-be-executed instruction word based on the first quantity of instructions in the target cache queue and the target scheduling mode.

2. The network processor according to claim 1, wherein the scheduling mode comprises a very long instruction word scheduling mode, and when scheduling modes corresponding to the plurality of scheduling requests comprise the very long instruction word scheduling mode, the scheduling requests further comprise instruction distribution information indicative of distribution locations of a valid instruction and a no-operation instruction in the first quantity of instructions in the cache queue;
the scheduling response signal comprises a very long instruction word scheduling response signal, and the very long instruction word scheduling response signal indicates that the target scheduling mode is the very long instruction word scheduling mode; and
the scheduler is specifically configured to respond to the plurality of scheduling requests and send the very long instruction word scheduling response signal to a scheduling control module corresponding to a scheduling request whose scheduling mode is the very long instruction word scheduling mode.

3. The network processor according to claim 2, wherein the instruction word comprises a very long instruction word, and when a first scheduling request corresponding to a first cache queue in the target cache queue indicates that a scheduling mode of the first cache queue is the very long instruction word scheduling mode,
the scheduler is further configured to: when instruction distribution information of the first scheduling request indicates that there is a no-operation instruction, respond to a second scheduling request corresponding to a second cache queue in the target cache queue and send a superscalar scheduling response signal to a scheduling control module corresponding to the second cache queue; and
the scheduling control module is further configured to perform a shift operation and an OR operation on an instruction in the first cache queue and an instruction in the second cache queue, to generate a to-be-executed very long instruction word.

4. The network processor according to claim 1, wherein the scheduling mode comprises a superscalar scheduling mode, the scheduling response signal comprises a superscalar scheduling response signal, and the superscalar scheduling response signal indicates that the target scheduling mode is the superscalar scheduling mode; and
when scheduling modes corresponding to the plurality of scheduling requests are all the superscalar scheduling mode, the scheduler is specifically configured to respond to the plurality of scheduling requests and send a plurality of superscalar scheduling response signals to the plurality of scheduling control modules.

5. The network processor according to claim 4, wherein the instruction word comprises a superscalar instruction word, and the scheduling control module is specifically configured to respond to the plurality of superscalar scheduling response signals, and generate a to-be-executed superscalar instruction word based on the first quantity of instructions in the target cache queue and the superscalar scheduling mode, wherein a quantity of instructions in the superscalar instruction word is the same as the first quantity, a location of a valid instruction in the superscalar instruction word corresponds to an identifier of the target cache queue, and an instruction other than the valid instruction in the superscalar instruction word is a no-operation instruction.

6. The network processor according to any one of claims 1 to 5, wherein the plurality of cache queues are configured to cache received instructions into target cache queues based on received second indication information, wherein the second indication information indicates identifiers of the target cache queues of the instructions.

7. The network processor according to any one of claims 1 to 6, wherein the network processor further comprises an execution module; and
the execution module is configured to execute the to-be-executed instruction word.

8. The network processor according to claim 7, wherein the execution module comprises a plurality of first multiplexers, a plurality of registers, a second multiplexer, and a plurality of third multiplexers, wherein the plurality of first multiplexers are in one-to-one correspondence with the plurality of registers, and the plurality of registers are in one-to-one correspondence with the plurality of third multiplexers;
an output end of each first multiplexer is coupled to an input end of a corresponding register, output ends of the plurality of registers are respectively coupled to a plurality of input ends of the second multiplexer, an output end of each register is further coupled to a first input end of a corresponding third multiplexer, and an output end of the second multiplexer is further coupled to a second input end of the third multiplexer;
the second multiplexer is configured to obtain an operand of an instruction in the to-be-executed very long instruction word; and
the third multiplexer is configured to determine, from the operand of the instruction in the to-be-executed very long instruction word obtained by the second multiplexer and an operand of the instruction in the superscalar instruction word, a to-be-executed operand corresponding to a thread.

9. The network processor according to any one of claims 1 to 8, wherein the network processor further comprises a storage module, configured to store a plurality of instructions; and
if a storage address of the instruction in the storage module is within a first address range, the scheduling mode of the instruction indicated by the first indication information is the superscalar scheduling mode; or if a storage address of the instruction in the storage module is within a second address range, the scheduling mode of the instruction indicated by the first indication information is the very long instruction word scheduling mode.

10. The network processor according to any one of claims 1 to 8, wherein if the first indication information is a first value, the scheduling mode of the instruction indicated by the first indication information is the superscalar scheduling mode; or if the first indication information is a second value, the scheduling mode of the instruction indicated by the first indication information is the very long instruction word scheduling mode.

11. A compiler, comprising a compilation module and a sending module, wherein
the compilation module is configured to compile an instruction based on a compilation requirement corresponding to the instruction, to obtain a compiled instruction and first indication information, wherein the first indication information indicates a scheduling mode of the compiled instruction; and
the sending module is configured to send the compiled instruction and the first indication information to a network processor.

12. The compiler according to claim 11, wherein the compilation requirement comprises a compilation mode comprising a superscalar compilation mode and a very long instruction word compilation mode, the scheduling mode comprises a superscalar scheduling mode and a very long instruction word scheduling mode, and if a compilation mode of the instruction is the superscalar compilation mode, the first indication information indicates that the scheduling mode of the instruction is the superscalar scheduling mode; or
if a compilation mode of the instruction is the very long instruction word compilation mode, the first indication information indicates that the scheduling mode of the instruction is the very long instruction word scheduling mode.

13. The compiler according to claim 11 or 12, wherein the compilation requirement is determined based on a service type corresponding to the instruction or a performance requirement of the instruction.

14. An instruction scheduling method, applied to a network processor, wherein the network processor comprises a scheduler, a plurality of scheduling control modules, and a plurality of cache queues, the plurality of scheduling control modules are in one-to-one correspondence with the plurality of cache queues, and the method comprises:
separately obtaining, by the plurality of scheduling control modules, a first quantity of instructions from one of a plurality of non-empty cache queues, and generating a scheduling request based on first indication information of the first quantity of instructions in each non-empty cache queue, to obtain a plurality of scheduling requests, wherein each scheduling request corresponds to each non-empty cache queue, and the first indication information indicates a scheduling mode of the first quantity of instructions;
sending, by the plurality of scheduling control modules, the plurality of scheduling requests to the scheduler;
responding, by the scheduler, to the plurality of scheduling requests and sending at least one scheduling response signal to at least one scheduling control module, wherein the scheduling response signal indicates a to-be-scheduled target cache queue and a target scheduling mode of the first quantity of instructions; and
responding, by the at least one scheduling control module, to the at least one scheduling response signal, and generating a to-be-executed instruction word based on the first quantity of instructions in the target cache queue and the target scheduling mode.

15. The method according to claim 14, wherein the scheduling mode comprises a very long instruction word scheduling mode, and when scheduling modes corresponding to the plurality of scheduling requests comprise the very long instruction word scheduling mode, the scheduling requests further comprise instruction distribution information indicative of distribution locations of a valid instruction and a no-operation instruction in the first quantity of instructions in the cache queue; the scheduling response signal comprises a very long instruction word scheduling response signal, and the very long instruction word scheduling response signal indicates that the target scheduling mode is the very long instruction word scheduling mode; and the responding, by the scheduler, to the plurality of scheduling requests and sending at least one scheduling response signal to at least one scheduling control module comprises:
responding, by the scheduler, to the plurality of scheduling requests and sending the very long instruction word scheduling response signal to a scheduling control module corresponding to a scheduling request whose scheduling mode is the very long instruction word scheduling mode.

16. The method according to claim 15, wherein the instruction word comprises a very long instruction word, and when a first scheduling request corresponding to a first cache queue in the target cache queue indicates that a scheduling mode of the first cache queue is the very long instruction word scheduling mode, the method further comprises:
when instruction distribution information of the first scheduling request indicates that there is a no-operation instruction, responding, by the scheduler, to a second scheduling request corresponding to a second cache queue in the target cache queue and sending a superscalar scheduling response signal to a scheduling control module corresponding to the second cache queue; and
performing, by the scheduling control module, a shift operation and an OR operation on an instruction in the first cache queue and an instruction in the second cache queue, to generate a to-be-executed very long instruction word.

17. The method according to claim 14, wherein the scheduling mode comprises a superscalar scheduling mode, the scheduling response signal comprises a superscalar scheduling response signal, and the superscalar scheduling response signal indicates that the target scheduling mode is the superscalar scheduling mode; and when scheduling modes corresponding to the plurality of scheduling requests are all the superscalar scheduling mode, the responding, by the scheduler, to the plurality of scheduling requests and sending at least one scheduling response signal to at least one scheduling control module comprises:
responding, by the scheduler, to the plurality of scheduling requests and sending a plurality of superscalar scheduling response signals to the plurality of scheduling control modules.

18. The method according to claim 17, wherein the instruction word comprises a superscalar instruction word, and the responding, by the at least one scheduling control module, to the at least one scheduling response signal, and generating a to-be-executed instruction word based on the first quantity of instructions in the target cache queue and the target scheduling mode comprises:
responding, by the scheduling control module, to the plurality of superscalar scheduling response signals, and generating a to-be-executed superscalar instruction word based on the first quantity of instructions in the target cache queue and the superscalar scheduling mode, wherein a quantity of instructions in the superscalar instruction word is the same as the first quantity, a location of a valid instruction in the superscalar instruction word corresponds to an identifier of the target cache queue, and an instruction other than the valid instruction in the superscalar instruction word is a no-operation instruction.

19. The method according to any one of claims 14 to 18, wherein the method further comprises:
caching, by the plurality of cache queues, received instructions into target cache queues based on received second indication information, wherein the second indication information indicates identifiers of the target cache queues of the instructions.

20. The method according to any one of claims 14 to 19, wherein the network processor further comprises an execution module, and the method further comprises:
executing, by the execution module, the to-be-executed instruction word.

21. The method according to claim 20, wherein the execution module comprises a plurality of first multiplexers, a plurality of registers, a second multiplexer, and a plurality of third multiplexers, wherein the plurality of first multiplexers are in one-to-one correspondence with the plurality of registers, and the plurality of registers are in one-to-one correspondence with the plurality of third multiplexers; an output end of each first multiplexer is coupled to an input end of a corresponding register, output ends of the plurality of registers are respectively coupled to a plurality of input ends of the second multiplexer, an output end of each register is further coupled to a first input end of a corresponding third multiplexer, and an output end of the second multiplexer is further coupled to a second input end of the third multiplexer; and the executing, by the execution module, the to-be-executed instruction word comprises:
obtaining, by the second multiplexer, an operand of an instruction in the to-be-executed very long instruction word; and
determining, by the third multiplexer from the operand of the instruction in the to-be-executed very long instruction word obtained by the second multiplexer and an operand of the instruction in the superscalar instruction word, a to-be-executed operand corresponding to a thread.

22. The method according to any one of claims 14 to 21, wherein the network processor further comprises a storage module, and the method further comprises:
storing, by the storage module, a plurality of instructions, wherein if a storage address of the instruction in the storage module is within a first address range, the scheduling mode of the instruction indicated by the first indication information is the superscalar scheduling mode; or if a storage address of the instruction in the storage module is within a second address range, the scheduling mode of the instruction indicated by the first indication information is the very long instruction word scheduling mode.

23. The method according to any one of claims 14 to 21, wherein if the first indication information is a first value, the scheduling mode of the instruction indicated by the first indication information is the superscalar scheduling mode; or if the first indication information is a second value, the scheduling mode of the instruction indicated by the first indication information is the very long instruction word scheduling mode.

24. A compilation method, wherein the compilation method is applied to a compiler, the compiler comprises a compilation module and a sending module, and the method comprises:
compiling, by the compilation module, an instruction based on a compilation requirement corresponding to the instruction, to obtain a compiled instruction and first indication information, wherein the first indication information indicates a scheduling mode of the compiled instruction; and
sending, by the sending module, the compiled instruction and the first indication information to a network processor.

25. The method according to claim 24, wherein the compilation requirement comprises a compilation mode comprising a superscalar compilation mode and a very long instruction word compilation mode, the scheduling mode comprises a superscalar scheduling mode and a very long instruction word scheduling mode, and if a compilation mode of the instruction is the superscalar compilation mode, the first indication information indicates that the scheduling mode of the instruction is the superscalar scheduling mode; or
if a compilation mode of the instruction is the very long instruction word compilation mode, the first indication information indicates that the scheduling mode of the instruction is the very long instruction word scheduling mode.

26. The method according to claim 24 or 25, wherein the compilation requirement is determined based on a service type corresponding to the instruction or a performance requirement of the instruction.

27. A chip, wherein the chip comprises a network processor and a power supply circuit, the power supply circuit is configured to supply power to the network processor, and the network processor is configured to implement the method according to any one of claims 14 to 23.

28. A computer device, wherein the computer device comprises a processor and a storage, the storage is configured to store a set of computer instructions, and when executing the set of computer instructions, the processor is configured to perform the method according to any one of claims 14 to 23 or any one of claims 24 to 26.
